(19) Europäisches Patentamt
European Patent Office
Office européen des brevets

(11) **EP 4 495 290 A1**

(12) **EUROPEAN PATENT APPLICATION**

(43) Date of publication:
**22.01.2025 Bulletin 2025/04**

(21) Application number: **23186351.5**

(22) Date of filing: **19.07.2023**

(51) International Patent Classification (IPC):
$C25B\ 1/04^{(2021.01)}$   $B01J\ 21/02^{(2006.01)}$
$C25B\ 11/047^{(2021.01)}$   $C25B\ 11/067^{(2021.01)}$
$C25B\ 11/075^{(2021.01)}$   $H01M\ 4/90^{(2006.01)}$
$C01B\ 35/04^{(2006.01)}$

(52) Cooperative Patent Classification (CPC):
**C25B 1/04; C01B 35/04; C25B 11/047;
C25B 11/067; C25B 11/075; H01M 4/90**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Max-Planck-Gesellschaft zur
Förderung der
Wissenschaften e.V.
80539 München (DE)**

(72) Inventors:
• **Antonyshyn, Iryna
01187 Dresden (DE)**

• **Aras, Fatma
01219 Dresden (DE)**
• **Burkhardt, Ulrich
01187 Dresden (DE)**
• **Schmidt, Marcus
01187 Dresden (DE)**
• **Schlögl, Robert
01495 Berlin (DE)**
• **Grin, Juri
01277 Dresden (DE)**

(74) Representative: **Hoffmann Eitle
Patent- und Rechtsanwälte PartmbB
Arabellastraße 30
81925 München (DE)**

(54) **ELECTRODE, ELECTROLYZER, PRODUCTION METHOD AND USE OF ELECTRODE**

(57) The present invention relates to an electrode comprising or consisting of an electrocatalyst, the electrocatalyst comprising a metal boride, wherein the metal boride comprises at least one element M1 selected from Ti, Zr and Hf, and at least one element M2 selected from Co, Ni, Ru, Rh, Pd, Ir and Pt; and the metal boride contains more than 10 atomic % of M2. The present invention also provides an electrode obtainable by subjecting the electrode to an electrocatalytic reaction. It also relates to an electrolyzer comprising said electrode. It is also concerned with a method for producing an electrode, and use of an electrode in an electrocatalytic reaction.

Figure 7

**EP 4 495 290 A1**

**Description**

**Technical Field**

The present invention relates to an electrode comprising or consisting of an electrocatalyst. Furthermore, the present invention relates to a method for producing the electrode. The present invention is also directed to the use of the electrode in an electrocatalytic reaction.

**Background of the Invention**

Hydrogen production via water electrolysis does not satisfy the current demand of industry and provides less than 5 % of hydrogen on the market. The significant challenge stems from the sluggish kinetics of the anodic oxygen evolution reaction (OER). Furthermore, this technology depends on catalysts which possess limited stability upon reaction conditions. Therefore, the development of robust and active OER electrocatalysts is crucial.

In recent years, a tremendous scientific effort has been made towards the optimization of the electrocatalytic activity in materials by synthesis of intermetallic compounds, containing transition metals.

N.S. Peighambardoust et al., Journal of Alloys and Compounds 905 (2022) 164148 reports the preparation of electrocatalysts $Hf_{1-x}TM_xB_2$ (TM = Co, Ni, x = 0.1, 0.2, 0.3) and their use in hydrogen evolution reaction (HER) and OER. B. Mete et al., Electrochimica Acta 389 (2021) 138789 describes the preparation of electrocatalysts $Zr_{1-x}TM_xB_2$ (TM = Co, Ni, x = 0.05, 0.1, 0.2) and their use in HER and OER. In both cases, the electrodes were prepared by drop-casting of a catalyst ink onto a glassy carbon electrode.

The prior art electrocatalysts undergo deactivation during OER. In Peighambardoust *et al.,* the $Hf_{0.8}Co_{0.2}B_2$ electrocatalyst showed an overpotential loss of 20% after 20 h of OER at current density of 10 mA cm$^{-2}$. In Mete *et al.,* $Zr_{0.8}Ni_{0.2}B_2$ electrocatalyst showed an overpotential loss of 26% after 20 h of OER at current density of 10 mA cm$^{-2}$. Therefore, there is a demand for an electrocatalyst having good catalytic activity and durability. Further, the preparation method of the electrocatalysts employed in the prior art are not flexible, since the electrocatalyst must be supported on an electrode substrate. Therefore, there is also a need for providing a flexible method for producing an electrode.

**Technical Problem**

An object of the present invention is to provide an electrode comprising an electrocatalyst, which has an excellent activity and durability in electrocatalytic reactions. It is a further object of the present invention to provide a flexible method for producing an electrode. It is also an object of the present invention to provide a use of such an electrode.

**Summary of the Invention**

The present invention solves the above problems by providing an electrode comprising or consisting of an electrocatalyst, wherein the electrocatalyst comprises a metal boride. The metal boride comprises at least one element M1 selected from Ti, Zr and Hf, and at least one element M2 selected from Co, Ni, Ru, Rh, Pd, Ir and Pt, and contains more than 10 atomic % of M2. The electrode of the present invention is robust and shows a good electrocatalytic activity.

The present invention also provides a method for producing such an electrode, as well as use thereof in electrocatalytic reactions.

The present invention encompasses the following embodiments.

Embodiment 1. An electrode comprising or consisting of an electrocatalyst, the electrocatalyst comprising a metal boride, wherein

the metal boride comprises
at least one element M1 selected from Ti, Zr and Hf, and
at least one element M2 selected from Co, Ni, Ru, Rh, Pd, Ir and Pt; and
the metal boride contains more than 10 atomic % of M2.

Embodiment 2. The electrode of embodiment 1, wherein the metal boride is crystalline, and wherein the metal boride preferably comprises an ordered distribution of M1 and M2 within its crystal structure.

Embodiment 3. The electrode of embodiment 1 or 2, wherein the metal boride contains the element M2 in an amount of 11 atomic % or more, preferably 12 atomic % or more, preferably 15 atomic % or more, preferably 20 atomic % or more, preferably 30 atomic % or more, preferably 40 atomic % or more, preferably 50 atomic %.

Embodiment 4. The electrode of any one of embodiments 1 to 3, wherein the atomic ratio (M1+M2)/B is 0.6 or more, preferably 0.8 or more and 10 or less, more preferably 1 or more and 8 or less, particularly 2; and/or wherein the atomic ratio M2/M1 is 0.5 or more, preferably 1 or more and 15 or less, more preferably 1 or more and 11 or less, further preferably 2 or more and 4 or less, particularly 3.

Embodiment 5. The electrode of any one of embodiments 1 to 4, wherein the metal boride contains

Zr and/or Hf as the element M1, and/or
Co and/or Ni as the element M2,
wherein the metal boride preferably has the atomic ratio of M1:M2:B of 1:3:2.

Embodiment 6. The electrode of embodiment 5, wherein the metal boride consists of

Zr and/or Hf as the element M1,
Co and/or Ni as the element M2, and
boron,
wherein the metal boride is preferably represented by the formula $M1M2_3B_2$.

Embodiment 7. The electrode of any one of embodiments 1 to 5, wherein the metal boride further contains less than 2.0 atomic % of one or more doping elements,

wherein the one or more doping elements are different from M1 and M2,
and optionally wherein the doping elements are one or more elements selected from Ru, Rh, Ir, Pt, Pd, Ni, Fe, Mo, Nb, Ta, W, Ce, Gd, V, Mn, Sr, Sn, Ge, S, P, F, N, and C.

Embodiment 8. An electrode obtainable by subjecting the electrode defined in any one of embodiments 1 to 7 to an electrocatalytic reaction.

Embodiment 9. An electrolyzer comprising the electrode defined in any one of embodiments 1 to 8.

Embodiment 10. A method for producing an electrode of any one of embodiments 1 to 9, comprising steps of

(i) melting

at least one metal selected from Ti, Zr and Hf,
at least one metal selected from Co, Ni, Ru, Rh, Pd, Ir and Pt, and
boron
to obtain a melt mixture, and

(ii) cooling down the melt mixture to obtain a solid product, and
(iii) preferably homogenization annealing the solid product, preferably at a temperature of 800 °C or more for at least 1 hour.
Embodiment 11. The method of embodiment 10, further comprising a step of
(iv) cutting the annealed solid product, or

(iv') grinding the annealed solid product; and
after the step (iv'), optionally further comprising a step of
(v'-a) sintering the ground product, preferably by spark plasma sintering, or
(v'-b) applying the ground product onto an electrode substrate.

Embodiment 12. A method for producing an electrode of any one of embodiments 1 to 7, comprising steps of

(i) providing a powder composition comprising

at least one element M1 selected from Ti, Zr and Hf,
at least one element M2 selected from Co, Ni, Ru, Rh, Pd, Ir and Pt, and
boron; and

(ii) sintering the powder composition,

wherein the step (ii) of sintering is preferably carried out by spark plasma sintering.

Embodiment 13. A method for producing an electrode of any one of embodiments 1 to 7, wherein the electrocatalyst is formed on a current carrier, the current carrier comprising at least one metal M1 selected from Ti, Zr and Hf, and

at least one metal M2 selected from Co, Ni, Ru, Rh, Pd, Ir and Pt; and
wherein the method comprises a step of contacting the current carrier in a heated state with gaseous boron halide to react the boron halide with the metals M1 and M2.

Embodiment 14. A method for producing an electrode of embodiment 8, wherein an electrode defined in one of embodiments 1 to 7 is subjected to an electrocatalytic reaction, which is preferably the oxygen evolution reaction.
Embodiment 15. Use of the electrode of any one of embodiments 1 to 8 in an electrocatalytic reaction selected from the oxygen evolution reaction, oxygen reduction reaction, hydrogen evolution reaction, hydrogen oxidation reaction and electrochemical processes with organic compounds.

**Brief Description of the Drawings**

**Figure 1:** Back-scattered electron images of pristine $ZrCo_3B_2$ and $HfCo_3B_2$ electrodes prepared in Examples 1 and 2.

**Figure 2:** Chronopotentiometry results for $ZrCo_3B_2$, $HfCo_3B_2$ and Co electrodes prepared in Examples 1 and 2 and Comparative Example 1, measured at a current density of 10 mA cm$^{-2}$.

**Figure 3:** Linear sweep voltammograms obtained for $ZrCo_3B_2$ and $HfCo_3B_2$ electrodes prepared in Examples 1 and 2, measured at current densities of 50, 100 and 200 mA cm$^{-2}$.

**Figure 4:** Chronopotentiometry with $ZrCo_3B_2$ and $HfCo_3B_2$ electrodes prepared in Examples 1 and 2, measured at current densities of 50, 100 and 200 mA cm$^{-2}$ for prolonged period of time.

**Figure 5:** Back-scattered electron image of $ZrCo_3B_2$ electrode prepared in Example 1, measured after the long-term OER experiments.

**Figure 6:** Cyclic voltammograms of $ZrCo_3B_2$, $HfCo_3B_2$, Zr, Hf and Co electrodes prepared in Examples 1 and 2 and Comparative Examples 1-3, measured in the HER potential region.

**Figure 7:** Chronopotentiometry with $ZrCo_3B_2$, $HfCo_3B_2$, Zr, Hf, and Co electrodes prepared in Examples 1 and 2 and Comparative Examples 1-3, measured at a current density of -10 mA cm$^{-2}$.

**Figure 8:** Cyclic voltammograms for $ZrCo_3B_2$, $HfCo_3B_2$, Zr, Hf, and Co electrodes prepared in Examples 1 and 2 and Comparative Examples 1-3 after chronopotentiometry at -10 mA cm$^{-2}$.

**Detailed Description of the Invention**

Where the present description refers to preferred embodiments/features including all levels of preference, combinations of these preferred embodiments/features shall also be deemed as disclosed, as long as this combination of preferred embodiments/features is technically meaningful.
Herein, the use of the term "comprising" or "including" should be understood as disclosing, as a more restricted embodiment, the term "consisting of" as well, as long as this is technically meaningful.
If preferred upper and lower limits are indicted for certain features, this should be understood as disclosing any combination of the upper and lower limits.

**Electrode**

As used herein, the term "electrode" refers to a conductive material configured to make a contact with an electrolyte during an electrocatalytic reaction. "Conductivity" as used herein refers to the degree to which a specific material conducts electricity, calculated as the ratio of the current density in the material to the electric field which causes the flow of current. As used herein, being conductive means that the material has a conductivity of $10^5$ S/m or more at room temperature. If the electrode consists of an electrocatalyst, the electrocatalyst is conductive. If the electrode comprises an electrocatalyst provided on an electrode substrate, the electrocatalyst is conductive, and the electrode substrate is preferably also conductive. The conductivity is the reciprocal of the resistivity.

As used herein, the term "electrocatalyst" refers to a material which is capable of increasing the rate of an electrochemical reaction. An electrocatalyst is not consumed in a reaction and can act repeatedly.

The electrode of the present invention comprises an electrocatalyst. The electrocatalyst may itself be provided as an electrode. Hence, the electrode of the present invention may consist of an electrocatalyst. The electrode may alternatively comprise an electrocatalyst provided on an electrode substrate. The electrode of the present invention is suitable for water electrolysis or other catalytic processes.

As used herein, "electrode substrate" refers to a solid material on which the electrocatalyst is formed or deposited.

Electrocatalyst

The electrocatalyst of the present invention comprises or consists of a metal boride. The metal boride comprises at least one element M1 selected from Ti, Zr and Hf, and at least one element M2 selected from Co, Ni, Ru, Rh, Pd, Ir and Pt. The metal boride contains more than 10 atomic % of M2.

As used herein, the term "metal boride" refers to a compound between at least boron, the at least one element M1 and the at least one element M2.

The metal boride may be crystalline. "Crystalline" generally means a solid with long-range order of the atoms in the crystal structure. To verify the crystallinity of the metal boride, X-ray diffraction can be applied. Crystalline compounds give a well-defined inherent set of the Bragg peaks in the X-ray diffraction pattern, whereas compounds in an amorphous state do not give such a pattern. Interpretation of X-ray powder diffraction can be done based on three important parameters: position, intensity and shape of the Bragg reflections, containing information about the crystal structure, level of ordering in the crystal structure and properties of the compound. Peak position reflects the unit cell parameters, from the peak intensities the atomic coordinates can be derived, whereas peak shape gives the information about crystallinity of the sample, possible disorder or defects in the structure. Within the present invention, "crystalline" means that at least one peak attributed to the metal boride is observed when measured by X-ray diffraction (XRD) as described in the examples. To the contrary, when no XRD peak attributed to the metal boride is observed, the metal boride is "amorphous". As used herein, a signal observed by XRD is considered as a "peak", if the maximum intensity of the signal is at least 3 times higher than the signal-to-noise ratio (SNR). The SNR is determined as follows, wherein "RMS" is a value obtained by determining the signal-to-signal amplitude of the noise and dividing this value by 5:

$$SNR = \frac{maximum\ intensity\ of\ the\ signal}{RMS}$$

When the metal boride is crystalline, the metal boride may comprise an ordered distribution of M1, M2 and B within its crystal structure. In other words, the metal boride may have an at least partially ordered distribution of the constituent elements within its crystal structure. When the metal boride has a partially ordered distribution of the constituent elements in its crystal structure, some of the Wyckoff positions are fully occupied by certain sort of atoms (M1, M2 or B), but there are also Wyckoff positions occupied by statistical mixture of e.g. two sorts of atoms (M1 and B) and some positions may be partially occupied. Preferably, the atomic ratio of M1/M2 within at least one available Wyckoff position deviates from the statistical atomic ratio M1/M2 by 10% or more, preferably by 20% or more, more preferably by 30% or more. For example, if a metal boride containing M1 and M2 at an overall atomic ratio M1/M2 of 0.5 has a certain Wyckoff position, which is occupied by M1 and M2 at an atomic ratio M1/M2 of 0.6, then this value deviates from the statistical atomic ratio M1/M2 by 20%. The metal boride may also have a completely ordered distribution of M1 and M2 elements within its crystal structure, in which the corresponding Wyckoff positions are fully occupied by M1, M2 or B atoms. The at least partially ordered distribution of M1 and M2 is advantageous for forming well-defined active sites for electrocatalytic reactions.

The metal boride comprised in the electrocatalyst of the present invention may be present as one or more phases. The number of phases in the catalytically active material may be determined using XRD in combination with scanning electron microscopy (SEM) and energy dispersive X-ray spectroscopy (EDXS). Comparing the experimental XRD patterns of the studied materials with database data or theoretically calculated diffraction patterns allows a qualitative and quantitative identification of crystalline phases. The presence of amorphous materials may also be indicated from XRD data. SEM optionally combined with EDXS allows a qualitative and quantitative analysis of different phases. The analytical methods that are used herein are described in the examples below in detail. The metal boride may also be single-phase, meaning that it contains only one metal boride with a defined crystal structure, or an amorphous metal boride. The metal boride may also be present in a nanoparticulated state.

In a preferred embodiment, the metal boride comprises or consists of a main phase of $M1M2_3B_2$, and a secondary phase $M1_xM2_{23-x}B_6$ ($x$ = 2-3), and more preferably a main phase of $ZrCo_3B_2$, and a secondary phase $Zr_xCo_{23-}$

$_xB_6$ ($x = 2$). The secondary phase may be present in a quantity of less than 40 mass %, preferably less than 20 mass %, preferably less than 5 mass % relative to the metal boride as a whole when detected by the XRD. The presence of the secondary phase can be also observed from light microscopy images as well as from SEM analysis (backscattered electron (BSE) images) as described in the examples.

According to the present invention, the metal boride contains more than 10 atomic % of M2 with respect to the metal boride as a whole. When the metal boride contains more than 10 atomic % of M2 with respect to the metal boride as a whole, the electrocatalyst achieves improved activity and durability in electrocatalytic reactions. Without wishing to be bound by any theory, the preference for a particular metal boride stoichiometry may vary within this range depending on the application. Preferably, the metal boride contains the element M2 in an amount of 11 atomic % or more, preferably 12 atomic % or more, preferably 15 atomic % or more, preferably 20 atomic % or more, preferably 30 atomic % or more, preferably 40 atomic % or more, preferably 50 atomic %.

The atomic ratio (M1+M2)/B of the metal boride is not particularly limited. Preferably, the atomic ratio (M1+M2)/B of the metal boride is 0.6 or more, preferably 0.8 or more and 10 or less, preferably 1.0 or more and 8 or less, preferably 1.0 or more and 4 or less, preferably 2.

The atomic ratio M2/M1 of the metal boride is not particularly limited. Preferably, the atomic ratio M2/M1 of the metal boride is 0.5 or more, preferably 1 or more and 15 or less, preferably 1 or more and 11 or less, preferably 1 or more and 5 or less, preferably 1 or more and 4 or less, preferably 3.

As described above, the metal boride of the present invention comprises at least one element M1 selected from Ti, Zr and Hf, and at least one element M2 selected from Co, Ni, Ru, Rh, Pd, Ir and Pt. The atomic ratio of M1:M2:B in the metal boride is not particularly limited. According to a preferred embodiment, the atomic ratio M1:M2:B may be selected from 3:5:2, x:23-x:6 ($x = 2$-3), 10:19:8, 2:6:1, 1:1:1, 1:3:1, 1:3:4, 1:3:0.5, 1:3:2, 2:5:2, and 1:5:4. It is preferably 1:3:2.

The metal boride may consist of the at least one element M1, the at least one element M2 and boron, and have the atomic ratio M1:M2:B as described herein. This means that the metal boride may be selected from $M1_3M2_5B_2$, $M1_xM2_{23-x}B_6$ ($x = 2$-3), $M1_{10}M2_{19}B_8$, $M1_2M2_6B$, $M1M2B$, $M1M2_3B$, $M1M2_3B_4$, $M1M2_3B_{0.5}$, $M1M2_3B_2$, $M1_2M2_5B_2$, and $M1M2_5B_4$, and is preferably $M1M2_3B_2$.

M1 and M2 may be combined as desired. When the metal element M1 is Ti, then the metal boride may comprise at least one element M2 selected from Co, Ni, Ru, Rh, Pd, Ir and Pt. Alternatively, when the metal element M1 is Zr, then the metal boride may comprise at least one element M2 selected from Co, Ni, Ru, Rh, Pd, Ir and Pt. Further alternatively, when the metal element M1 is Hf, then the metal boride may comprise at least one element M2 selected from Co, Ni, Ru, Rh, Pd, Ir and Pt.

The metal boride may comprise two or more elements M1 selected from Ti, Zr and Hf. If the metal boride comprises two or more elements M1, the atomic ratio of the two or more elements comprised as M1 is not particularly limited. For example, one of the two or more elements M1 may be present at 1% to 99%, optionally 5% to 95%, 10% to 90%, 20% to 80%, 30% to 60% of the total elements M1. Also, the metal boride may comprise two or more elements M2 selected from Co, Ni, Ru, Rh, Pd, Ir and Pt. If the metal boride comprises two or more elements M2, the atomic ratio of the two or more elements comprised as M2 is not particularly limited. For example, one of the two or more elements M2 may be present at 1% to 99%, optionally 5% to 95%, 10% to 90%, 20% to 80%, 30% to 60% of the total elements M2.

According to a preferred embodiment, the metal boride contains Zr and/or Hf as the element M1, and/or Co and/or Ni as the element M2. The atomic ratio of M1:M2:B is not particularly limited, and may be selected from the ratios as described above. As described above, when Zr and Hf are used in combination as M1, the atomic ratio of Zr and Hf is not particularly limited. Also, when Co and Ni are used in combination as M2, the atomic ratio of Co and Ni is not particularly limited. According to a preferable aspect of this embodiment, the metal boride consists of Zr and/or Hf as the element M1, Co and/or Ni as the element M2, and boron. When using Zr and/or Hf as the element M1, Co and/or Ni as the element M2, the metal boride may be selected from $M1_3M2_5B_2$, $M1_xM2_{23-x}B_6$ ($x = 2$-3), $M1_{10}M2_{19}B_8$, $M1_2M2_6B$, $M1M2B$, $M1M2_3B$, $M1M2_3B_4$, $M1M2_3B_{0.5}$, $M1M2_3B_2$, $M1_2M2_5B_2$, and $M1M2_5B_4$. Preferably, the metal boride is represented by the formula $M1M2_3B_2$.

According to another preferred embodiment, M1 is Zr or Hf, and M2 is Co or Ni. That is, the combination of M1 and M2 is selected from Hf and Co, Zr and Co, Hf and Ni, and Zr and Ni. According to a preferable aspect of this embodiment, the metal boride consists of said combination of M1 and M2 and boron. The atomic ratio of M1:M2:B is not particularly limited, and may be selected from the ratios as described above. The metal boride may consist of M1, M2 and B and have a previously described atomic ratio of M1:M2:B. Preferably, the metal boride is represented by the formula $M1M2_3B_2$. Further preferably, the metal boride is $HfCo_3B_2$ or $ZrCo_3B_2$. $ZrCo_3B_2$ is particularly preferred.

The metal boride may further comprise less than 2.0 atomic % of one or more doping elements that are different from M1 and M2. Where the metal boride comprises a doping element, the metal boride may comprise or consist of the at least one element M1, the at least one element M2, boron and the doping element. The doping elements are not particularly limited, and may be one or more elements selected from Ru, Rh, Ir, Pt, Pd, Ni, Fe, Mo, Nb, Ta, W, Ce, Gd, V, Mn, Sr, Sn, Ge, S, P, F, N, and C.

The electrocatalyst of the present invention may be impurity-free. The term "impurity-free" as used herein refers to a material that comprises less than 5 mass %, preferably less than 2 mass %, more preferably less than 1 mass % and most preferably less than 0.5 mass % impurities. The purity of the electrocatalyst according to the present invention results from the production method thereof. A very small residue of impurities within the catalytically active material of the present invention may result from traces of e.g. water or side products in the system. The electrocatalyst of the present invention may also be impurity-free and single-phase, meaning that the material is both impurity-free as defined above and contains only one metal boride.

The term "impurity" as used herein in context with the electrocatalyst comprises components and compounds other than one or more metal borides as defined above. For the avoidance of doubt, the doping elements as described above are not impurities. Without wishing to be bound by any theory, impurities as defined herein may result from a contamination during electrode production, for instance side reactions with the parts of the experimental setup. Exemplary reasons for side reactions involve contaminated reactants, as well as reactions with crucibles. A "crucible" as used herein is a container in which substances, e.g. metals, can be melted or heated to very high temperatures. In particular, impurities in the form of oxides and carbides may have a strong impact on the desired properties of the metal-rich borides described above. Whereas carbides may result from crucibles, oxides may result from impurities within the reactants or from the direct contact with a reaction vessel, such as e.g. a quartz tube. If metal halides are present as impurities, they may be excluded by applying further evaporation and/or washing steps.

The electrocatalyst of the present invention optionally has an electrical conductivity of $1*10^5$ S/m or more and $1*10^6$ S/m or less, or $1*10^5$ S/m or more and $5*10^5$ S/m or less.

Electrode

The shape and size of the electrode of the present invention is not particularly limited, and any suitable shape and size may be selected. For example, the electrode may have a wire-like shape, a plate-like shape or a cylindrical shape.

The electrode of the present invention shows an excellent activity and durability in electrocatalytic reactions.

In one embodiment, the electrode shows the OER onset potential of 1.6 V or less, preferably 1.55 V or less, more preferably 1.53 V or less. This may be determined by chronopotentiometry at a current density of 10 mA cm$^{-1}$ in an alkaline (optionally 1 M KOH) electrolyte and in a three-electrode cell, containing a working electrode according to the present invention, platinum wire as counter electrode and Hg/HgO reference electrode.

In one embodiment, the electrode does not show an increase in potential of more than 10%, preferably not more than 5%, during the HER. This may be determined when measured by chronopotentiometry at a current density of 10 mA cm$^{-2}$ for 120 minutes in an alkaline media (optionally 1 M KOH) and in a three-electrode cell, containing a working electrode according to the present invention, platinum wire as counter electrode and Hg/HgO reference electrode. Preferably, the electrode shows a decrease in potential during the HER when measured under the same conditions.

In one embodiment, the electrode does not show an increase in potential of more than 10%, preferably not more than 5% during the OER. This may be determined during the OER when measured by chronopotentiometry at a current density of 50 mA cm$^{-2}$ for 96 hours in an alkaline solution (optionally 1 M KOH) and in a three-electrode cell, containing a working electrode according to the present invention, platinum wire as counter electrode and Hg/HgO reference electrode. Preferably, the electrode shows a decrease in potential during the OER when measured under the same conditions.

In one embodiment, the electrode does not show an increase in potential of more than 10%, preferably not more than 5% during the OER. This may be determined during the OER when measured by chronopotentiometry at a current density of 100 mA cm$^{-2}$ for 96 hours in an alkaline solution (optionally 1 M KOH) and in a three-electrode cell, containing a working electrode according to the present invention, platinum wire as counter electrode and Hg/HgO reference electrode. Preferably, the electrode shows a decrease in potential during the OER when measured under the same conditions.

In one embodiment, the electrode does not show an increase in potential of more than 10%, preferably not more than 5%, during the OER. This may be determined when measured by chronopotentiometry at a current density of 200 mA cm$^{-2}$ for 312 hours in an alkaline solution (optionally 1 M KOH) and in a three-electrode cell, containing a working electrode according to the present invention, platinum wire as counter electrode and Hg/HgO reference electrode. Preferably, the electrode shows a decrease in potential during the OER when measured under the same conditions.

As described above, in one embodiment, the electrode may consist of an electrocatalyst. That is, the electrocatalyst may be as such provided as an electrode, without using a substrate or a binder. The electrode of this embodiment may be produced by the first method of the present invention as described below.

When the electrode consists of the electrocatalyst, there is no interface between the substrate and the electrocatalyst, which may be advantageous in terms of electrocatalytic activity, electrode stability and durability. Also, such an electrode is advantageous in scientific studies, since the influence of components other than the electrocatalyst (such as a binder and a substrate) can be ruled out.

The thickness of the electrode consisting of the electrocatalyst is not particularly limited, and may be 10 $\mu$m to 10 mm, 100 $\mu$m to 5 mm, 1 mm to 5 mm.

Furthermore, if the electrocatalyst undergoes structural or morphological changes on the surface or in near-surface region during electrocatalytic reaction, which may lead to a change in electrocatalytic activity, the surface of the electrode can be polished to restore the pristine electrocatalyst as described later. This refreshed electrode can be used for another electrochemical reaction with a high level of reproducibility. Alternatively or in addition, the refreshing step may be carried out prior to an electrocatalytic reaction, for example on a pristine electrode.

In another embodiment, the electrode may comprise an electrocatalyst, which may be provided on the outermost surface of an electrode substrate. The electrocatalyst is able to contact an electrolyte during an electrocatalytic reaction. The electrode substrate may have any shape. Without wishing to be bound by any theory, the selection of the electrode substrate may vary depending on the application. Any known material may be used as the electrode substrate. The electrode substrate is preferably a conductive and alkaline-resistant material. Preferred examples of the electrode substrate include gold, nickel, stainless steel, corrosion-resistant steels and an alloy of two or more of these metals. The electrode substrate may comprise at least one element M1 selected from Ti, Zr and Hf, and at least one element M2 selected from Co, Ni, Ru, Rh, Pd, Ir and Pt. Further, the electrode substrate may comprise at least one of the same metal elements as the electrocatalyst. The electrode substrate may be an alloy or an intermetallic compound comprising at least said elements M1 and M2.

The electrode substrate may have any shape, and preferably a "two-dimensional" or "three-dimensional" shape. The terms "two-dimensional" or "three-dimensional" as used herein refer to shapes that are defined by a certain degree of extension of two or three of the dimensions height, length and width. In a two-dimensional shape, a body is extended in its width and length relative to its height. Three-dimensional in the sense of the present invention is fulfilled by a body that is extended in all three dimensions of width, length, and height. To give specific examples, a wire represents a body which is extended in only one dimension, i.e. along the length of the wire. A sheet, a gauze, or a lattice as defined below are two dimensional. A network or a foam as described below are three-dimensional. Taking into account the previous explanation, the dimensionality may for further exemplification be described by the aspect ratios of bodies. In a two-dimensional shape the aspect ratio (h:l:w) between height (h), length (l) and width (w) may be at most 1:3:3, preferably at most 1:5:5, and more preferably at most 1:10:10. Within these aspect ratio limits the length and the width may be varied independently from each other, excluding a situation wherein only one of the length and the width is excessively extended as this would result in one-dimensionality. In a three-dimensional shape, the aspect ratio between the three dimensions may be above 1:3:3, preferably above 1:2:2, more preferably above 1:1.5:1.5. Within these aspect ratio limits the three dimensions may be varied independently from each other, excluding a situation wherein only one of the dimensions is excessively shortened as this would result in one-dimensionality. Most preferably the aspect ratio of three dimensions may be about 1:1:1 in a three-dimensional shape.

The electrode substrate may have any shape. Preferably, the electrode substrate may be a sheet, a gauze, a lattice, a network or a foam. More preferably, the electrode substrate may be in the form a sheet, a gauze or a foam. More preferably, the electrode substrate may be in the form a sheet or a gauze. A sheet is a two-dimensional shape not having cavities therein. A gauze is a two-dimensional shape formed by wires crossing each other in a disordered fashion to form cavities within the shape. A lattice is a two-dimensional shape made of wires connected to each other in an ordered arrangement to form regular cavities. A network is a three-dimensional shape and is several gauzes and/or lattices that are layered and interconnected. A foam is a three-dimensional shape and is a solid foam which is a shape made of a solid comprising bubble-like cavities within the solid. The cavities may be sealed or open and interconnected. Preferably at least 50%; and more preferably at least 75% of the total number of cavities may be open. A foam is generally characterised by its high porosity of between 99 - 60%, preferably between 95 - 70% based on the cavity volume compared to the total volume taken up by the foam. The porosity of a foam may be measured by any suitable methods. For instance, the porosity may be measured by mercury porosity according to DIN ISO 15901-1:2019-03.

Preferably, the electrode substrate is electrically conductive. Such an electrically conductive electrode substrate is also referred to as "current carrier". Hence, the current carrier is a specific type of the electrode substrate, and the above-provided aspects of the electrode substrate apply to the current carrier. The current carrier has a conductivity of $10^5$ S/m or more at room temperature.

When the electrode comprises an electrocatalyst provided on an electrode substrate, the electrode may further comprise a binder. A "binder" as used herein refers to any adhesive material suitable to connect materials. The chemical composition of a binder depends on the composition of the substrates that are to be connected. The binder is preferably located between the electrocatalyst and the electrode substrate. The binder is not particularly limited, and any known material may be used. The examples of the binder include a sulfonated tetrafluoroethylene-based fluoropolymer-copolymer (Nafion), polytetrafluoroethylene (PTFE), quaternized polyphenylene oxide (qPPO), melamine resin, and a combination of carboxymethyl cellulose (CMC) and styrene-butadiene rubber (SBR).

The form of the electrocatalyst is not particularly limited. For example, the electrocatalyst may be provided as a powder or a layer.

In one embodiment, the electrocatalyst in a powder form may be provided on the electrode substrate. The electrocatalyst may be directly provided on the electrode substrate, or a binder as described above is preferably used to enhance adhesion of the electrocatalyst to the electrode substrate. In this embodiment, an average particle size of the electrocatalyst is not particularly limited. The average particle size may be determined by measuring the size of 20 arbitrarily selected particles by scanning electron microscopy (SEM) and calculating the average value. When the particle has a non-spherical shape, the longest axis of the particle is taken. The average particle size of the electrocatalyst may be, for example, 10 nm or more and 1 mm or less, preferably 100 nm or more and 500 $\mu$m or less, preferably 1 $\mu$m or more and 100 $\mu$m or less, preferably 10 $\mu$m or more and 50 $\mu$m or less.

In another embodiment, the electrocatalyst may be present as a layer on the electrode substrate covering at least a part of the electrode substrate surface as described above. The expression "layer" as used herein means that the electrocatalyst is spread over at least a part of the electrode substrate surface to cover it.

The thickness of the electrocatalyst layer is not particularly limited, and the preferred thickness of the electrocatalyst layer may depend on its role in catalysis and may be adapted to the needs of a respective application. For example, the layer may not only act as an active layer but, without wishing to be bound by any theory, may also act as an additional protective layer improving the electrode stability upon catalysis as some metal borides may have a lower stability under reaction conditions than others. Therefore, the layer of the electrocatalyst comprised in the electrode may optionally have a thickness of 1 nm or more and 1 mm or less, 10 nm or more and 500 $\mu$m or less, 100 nm or more and 100 $\mu$m or less, or 1 $\mu$m or more and 10 $\mu$m or less, depending on the desired application. In a preferred embodiment, the electrocatalyst layer is 1-10 $\mu$m thick.

In a preferred embodiment, an electrode of the present invention does not comprise a binder, and an electrode substrate is a current carrier as described above. That is, the electrode preferably consists of a current carrier and an electrocatalyst. Hence, the electrocatalyst is in direct contact with the current carrier. Direct contact means that no additional layer, e.g. no binder layer is present between the active material and the current carrier. A formation of the catalytically active material directly on the current carrier may be beneficial in terms of an absence of the additional interface in the system and as a result of improved production efficiency. In this embodiment, the current carrier comprises the same metal elements as the electrocatalyst. That is, the current carrier comprises at least one element M1 selected from Ti, Zr and Hf, and at least one element M2 selected from Co, Ni, Ru, Rh, Pd, Ir and Pt. Hence, in this embodiment, the current carrier may be an alloy or an intermetallic compound comprising at least said elements M1 and M2. While an alloy may be described as a mixture of the different elements without an ordered structure, an intermetallic compound is a mixture having an ordered structure. In other words, in an intermetallic compound, the elements occupy the defined positions in the crystal structure. The crystal structures of intermetallic compounds differ from those of their constituents.

Preferably, the current carrier in the electrode of the present invention is a sheet, a gauze, a lattice, a network or a foam as described above; the electrocatalyst forms a layer as specified above on the current carrier and optionally this layer has a thickness of 0.1 - 500 $\mu$m, 0.2 - 100 $\mu$m, 0.5 - 20 $\mu$m or 1 - 10 $\mu$m; and the electrode of the present invention does not comprise a binder. In a particularly preferred embodiment, the electrocatalyst that is comprised in the electrode of the present invention may have a thickness of 1-10 $\mu$m.

An electrode of said preferred embodiment may be produced by the second method as described later.

**Modification and refreshing of electrode**

While carrying out an electrocatalytic reaction on the electrode of the present invention, structural and/or physical properties of the electrode may change. Therefore, according to one embodiment, the electrode is obtainable by subjecting the above-described electrode comprising or consisting of an electrocatalyst to an electrocatalytic reaction. Without wishing to be bound by any theory, it is postulated that structural changes take place on the electrochemically exposed surface, near-surface or possibly even bulk regions of the electrocatalyst during the electrocatalytic reaction. Preferably, the electrocatalytic reaction in this context is the OER or the HER.

The surface or the near-surface region of electrocatalyst may change during an electrocatalytic reaction, which may lead to a change in the electrocatalytic activity. Such altered surface of the electrocatalyst may be refreshed as described later. The refreshing step may be also carried out prior to an electrocatalytic reaction, for example on a pristine electrode. In particular, an electrode consisting of an electrocatalyst as described before can be renewed by polishing the surface of the electrode. Such a refreshing method may also be applicable to an electrode comprising an electrocatalyst provided on an electrode substrate, wherein preferably the electrocatalyst is present as a layer on the electrode substrate.

**Electrolyzer**

The present invention also relates to an electrolyzer comprising the electrode as specified above. In general, an electrolyzer contains a cathode, an anode and a membrane.

In the electrolyzer of the present invention, two or more electrodes as described above may be connected in parallel or in series. Alternatively, or in addition, two or more, preferably two to six electrolyzers may be connected in parallel or in series for more efficient use of resources. An assembly of larger series or parallel arrays may include a variety of multiphase high voltage or high current sources, such as those found in industrial or utility applications.

**Method for producing electrode**

First method for producing electrode

The electrode according to the present invention may be produced by a method comprising the following steps:

(i) melting

at least one metal selected from Ti, Zr and Hf,
at least one metal selected from Co, Ni, Ru, Rh, Pd, Ir and Pt, and
boron

to obtain a melt mixture, and
(ii) cooling down the melt mixture to obtain a solid product.

This method has various advantages. Firstly, the contamination of the electrocatalyst with unreacted starting material and from the production processes can be avoided. In the conventional methods where metal oxides are used as starting materials, the prepared electrodes may be contaminated with the unreacted starting materials. Processing of powders, such as ball milling, also contaminates the electrocatalyst produced. Furthermore, since the starting materials are melted and mixed in a liquid state, the composition of the electrocatalyst can be precisely controlled and the obtained electrocatalyst is highly homogeneous. Furthermore, the amount of the produced electrocatalyst can be flexibly changed.

Preferably, in the step (i), at least one of the metals used is not in a powder form, such as foils, plates, slugs, blocks, and the like. This is advantageous, since uncontrolled admixtures which are unavoidable in case of metal powders can be avoided.

The conditions during the step (i) are not particularly limited, as long as the at least one metal selected from Ti, Zr and Hf, the at least one metal selected from Co, Ni, Ru, Rh, Pd, Ir and Pt, and boron are melted to obtain a melt mixture. That is, the step (i) should be carried out at a temperature above the melting points of said components.

It is preferable to carry out the step (i) in an inert atmosphere. Therefore, the step (i) is preferably carried out in nitrogen or argon atmosphere. A pressure during the step (i) is not particularly limited, and may be carried out in an atmospheric pressure, or above or below an atmospheric pressure. Preferably, the step (i) is carried out in vacuum, that is, below an atmospheric pressure.

The step (i) is preferably carried out by arc melting, more preferably by vacuum arc melting.

Preferably, the method further comprises, after above step (ii), a step (iii) of homogenization annealing of the solid product. The temperature and duration of the homogenization annealing are not particularly limited, and it is preferably carried out at a temperature of 800 °C or more for at least 1 hour. The temperature of the homogenization annealing is more preferably 900 °C or more and 1500 °C or less, further preferably 1000 °C or more and 1400 °C or less. The homogenization annealing is generally carried out below the melting point of the solid product. The duration of the homogenization annealing is more preferably at least 12 hours, optionally at least 1 day, at least 1 week, or 1 week. The conditions for the homogenization annealing may be chosen based on results of differential scanning calorimetry (DSC) or available in the literature phase diagrams. The homogenization annealing increases the homogeneity of the obtained electrocatalyst. In particular, performing the homogenization annealing step is advantageous for obtaining crystalline metal boride comprising an ordered distribution of the metal elements within its crystal structure as described above.

After the above step (ii) or (iii), the obtained solid product or the annealed product (also referred to as the "optionally annealed solid product") can be processed into an electrode by a known method. As described further below, the first method of the present invention provides a great flexibility in the production of the electrode and in the properties of the produced electrode.

According to invention (1-A), the electrode consists of the solid product obtained in step (ii) or the annealed product obtained in step (iii). That is, the solid product obtained in step (ii) or the annealed product obtained in step (iii) is as such an electrode. For example, the melt mixture obtained in step (i) may be casted into a mold before cooling to obtain a solid product in the step (ii). Also, an electrode substrate may be dipped into the melt mixture obtained in step (i), and then cooled down to obtain a solid product. Alternatively, the solid product or the annealed product may be shaped into a form of an electrode by a known method, for example by molding or forging.

According to invention (1-B), the method may further comprise a step (iv) of cutting the optionally annealed solid product after the above step (ii) or (iii). That is, an electrode may be cut out from the optionally annealed solid product. For example, one or more electrodes may be cut out from the ingot of the solid product or the annealed product. The cutting step may be carried out in any known suitable manner. For example, the cutting step may be carried out by using wire saw or using diamond saw. Further, the cutting step may be carried out under inert atmosphere, such as $N_2$ and/or Ar, for example in Ar glovebox.

According to invention (1-C), the method may further comprise a step (iv') of grinding the optionally annealed solid product after the above step (ii) or (iii). The ground product may then be further processed to obtain an electrode by a known method. The grinding step may be carried out by any suitable method. For example, the grinding step may be carried out by using an agate mortar or a tungsten carbide mortar. Further, the grinding step may be carried out under inert atmosphere, such as $N_2$ and/or Ar, for example in Ar glovebox.

The method may further comprise a step (v'-a) of sintering the ground product obtained during the step (iv'). That is, the ground product may be sintered to obtain an electrode. The temperature and the duration of the sintering are not particularly limited, as long as a sintered product can be obtained. The sintering conditions can be chosen based on available phase diagrams, or preferably based on results of DSC, preferably accompanied by powder XRD. The sintering step may be carried out at a temperature of 700-1300 °C, preferably 800-1200 °C, more preferably 900-1100 °C. The duration of the sintering may be 1 minute or more, preferably 5-60 minutes, more preferably 10-30 minutes. The sintering is preferably carried out by spark plasma sintering, as it is advantageous for achieving a greater density of the sintered product. The density of the sintered product is preferably at least 90% of the bulk.

Alternatively, the method may further comprise a step (v'-b) of applying the ground product onto an electrode substrate after the above step (iv'). In a case where the ground product is applied onto an electrode substrate, the electrode substrate is not particularly limited, and any known material may be used. Further, the ground product may be applied directly onto an electrode substrate, or a binder may be used. The binder is not particularly limited, and any known material may be used. The electrode substrates and binders as previously described may be used.

An average particle size of the ground product is not particularly limited. The average particle size is determined by measuring the sizes of 20 arbitrarily selected particles by scanning electron microscopy (SEM) and calculating the average value. When the particle has a non-spherical shape, the longest axis of the particle is taken. The average particle size of the ground product may be, for example, 100 nm or more and 1 mm or less, preferably 1 μm or more and 500 μm or less, preferably 10 μm or more and 100 μm or less, preferably 20 μm or more and 50 μm or less. Prior to step (v'-b) of applying the ground product onto an electrode substrate, the ground product may be sieved to adjust the average particle size as described above.

The electrode obtained by the first method as described above may be subjected to an electrocatalytic reaction, which is preferably the OER or the HER. While carrying out an electrocatalytic reaction on the electrode, electrochemical and/or physical properties of the electrode may change, as previously described. The electrocatalytic reaction may be carried out under the conditions as described later.

The surface of electrocatalyst may change during an electrocatalytic reaction. Such altered surface of the electrocatalyst may be refreshed by polishing the surface of the electrode as previously described. The invention therefore includes a method of refreshing the catalyst by treating the surface of the electrode, preferably by polishing the surface of the electrode, preferably using polishing paper, preferably using SiC paper. It is preferable that the polishing is carried out using a diamond solution comprising diamond particles in addition to the use of the polishing paper. The particle sizes of the diamond particles may be 100 nm to 0.1 μm, or 1 μm to 5 μm, or 5 μm to 10 μm. Two or more diamond particles having different particle sizes may be comprised in the diamond solution. The diamond solution preferably comprises diamond particles having particle sizes of 6 μm, 3 μm and ¼ μm. Alternatively or in addition, the refreshing step may be carried out prior to an electrocatalytic reaction, for example on a pristine electrode.

Second method for producing electrode

The electrode according to the present invention may be produced by a method comprising the following steps:

(i) providing a powder composition comprising

at least one element M1 selected from Ti, Zr and Hf,
at least one element M2 selected from Co, Ni, Ru, Rh, Pd, Ir and Pt, and boron; and

(ii) sintering the powder composition.

The powder composition may comprise or consist of a powder of at least one metal M1 selected from Ti, Zr and Hf; a powder of at least one element M2 selected from Co, Ni, Ru, Rh, Pd, Ir and Pt; and a powder of boron.

Alternatively, the powder composition may comprise or consist of a powder comprising at least two of the constituent elements as described above; and a powder of the remaining constituent element.

In one embodiment, the powder comprising at least two of the constituent elements may comprise at least one element M1 selected from Ti, Zr and Hf, and at least one element M2 selected from Co, Ni, Ru, Rh, Pd, Ir and Pt. In this case, the powder of the remaining constituent element is a powder of boron.

In another embodiment, the powder comprising at least two of the constituent elements may comprise at least one element M1 selected from Ti, Zr and Hf, and boron. In this case, the powder of the remaining constituent element is a powder of at least one element M2 selected from Co, Ni, Ru, Rh, Pd, Ir and Pt.

In yet another embodiment, the powder comprising at least two of the constituent elements may comprise at least one element M2 selected from Co, Ni, Ru, Rh, Pd, Ir and Pt, and boron. In this case, the powder of the remaining constituent element is a powder of at least one element M1 selected from Ti, Zr and Hf.

The sintering step (ii) may be carried out as described in connection to (1-C).

The electrode obtained by the second method as described above may be subjected to an electrocatalytic reaction as described in view of the first method. The refreshing step as described above in view of the first method may be carried out.

Third method for producing electrode

The electrode according to the present invention may be also produced by a method, wherein an electrocatalyst is formed on a current carrier. In this method, the current carrier comprises at least one metal M1 selected from Ti, Zr and Hf, and at least one metal M2 selected from Co, Ni, Ru, Rh, Pd, Ir and Pt. The metals M1 and M2 may be present as a mixture or a compound in the current carrier. Preferably, the metals M1 and M2 are present as a compound in the current carrier. The method comprises a step of contacting the current carrier in a heated state with gaseous boron halide to react the boron halide with the metals M1 and M2. Hence, the electrocatalyst and the current carrier comprise the same metal elements M1 and M2.

In this method, the electrocatalyst is formed "on" a current carrier. This means that the electrocatalyst is made on and also from the current carrier by the method of the invention as described in greater detail below. After the formation, in the produced electrode, it means the electrocatalyst is in direct contact with the current carrier. Direct contact means that no additional layer, e.g. no binder layer is present between the electrocatalyst and the current carrier. A formation of the electrocatalyst directly on the current carrier may be beneficial in terms of an absence of the additional interface in the system and as a result of improved production efficiency.

The third method of the present invention comprises or consists of a step of contacting the current carrier in a heated state with gaseous boron halide to react the boron halide with the metals M1 and M2. The electrocatalyst is formed by a step of contacting the current carrier in a heated state with a gaseous boron halide $BHal_3$. Contacting means that the gaseous boron halide is in the atmosphere around the current carrier. The halide group in "$Hal_3$" may comprise one or more selected from F, Cl, Br and I; preferably one or more selected from Cl, Br and I; more preferably the halide group may comprise one selected from Br and I and most preferably the halide group may be Br. This step initiates a heterogeneous reaction between the gaseous boron halide and the solid current carrier that results in the formation of the electrocatalyst on the current carrier. Without wishing to be bound by any theory, the formation of the electrocatalyst according to the third method of the present invention may be described by the following Equation (1):

$$(x1+z1)\ M1\ (s) + (x2+z2)\ M2\ (s) + (y1+y2)\ BHal_3\ (g) \rightarrow$$
$$x1\ M1Hal_{3y1/x1}\ (g) + x2\ M2Hal_{3y2/x2}\ (g) + M1_{z1}M2_{z2}B_{y1+y2}\ (s) \qquad (1)$$

In the above Equation (1), x1 and x2 are each a number from 0.5 to 9, y1 and y2 are each 1, 2 or 3, and z1 and z2 are each 1, 2, 3 or 4. Accordingly, the amount, composition and number of different metal boride species in the electrocatalyst made by the third method of the present invention depends on a number of parameters. The formation of the metal borides may be influenced by the composition of the current carrier, the contacting time with the gaseous boron halide, the partial pressure of the gas as well as the reaction temperature. A potential contamination of the borides with metal halides $M1Hal_{3y1/x1}$ and $M2Hal_{3y2/x2}$, formed as a byproduct as shown in Equation (1) above, may be excluded by applying the further evaporation and/or washing steps mentioned herein.

The current carrier may be placed in a reaction vessel, e.g. a quartz tube, for the contacting with gaseous boron halide. The method may optionally further comprise an evaporation step, a washing step or both to remove the gaseous reactant, other possible reaction products or both.

The current carrier that is used in the third method of the present invention may have any shape as previously described. Preferably, the current carrier may be a sheet, a gauze, a lattice, a network or a foam. More preferably, the current carrier may be in the form a sheet, a gauze or a foam. More preferably, the current carrier may be in the form a sheet or a gauze.

The method of the present invention may allow the provision of a catalytically active material suitable in large-scale applications. In electrocatalysis, an electrode area of about 150 cm$^2$ should be used to produce 1 kW energy. The surface area of the current carrier may vary depending on its shape as described above. The surface area as used herein is the projected geometrical surface area of the current carrier. It may be determined by measuring the dimensions of the exposed surfaces of the current carrier and calculating the overall surface area. For example, the projected geometrical surface area of a foam in the shape of a cube is calculated simply by multiplying the length by the width of the cube to determine the surface area of each face of the cube, and adding together the surface areas of each face to arrive at the projected geometrical surface area of the cube. The surface area of the current carrier may be greater than 100 cm$^2$, preferably greater than 500 cm$^2$, preferably greater than 1000 cm$^2$, preferably greater than 0.5 m$^2$, preferably greater than 1 m$^2$ and most preferably greater than 3 m$^2$.

In the third method of the present invention, the current carrier may preferably be heated by an electrical current. The current carrier may for instance be placed into an induction furnace. An induction furnace comprises a non-conductive crucible (such as a quartz tube) holding the current carrier, which is surrounded by a coil through which an alternating current flows. The coil creates a rapidly reversing magnetic field that penetrates the current carrier. The magnetic field induces eddy currents (circular electric currents) inside the current carrier by electromagnetic induction. The eddy currents, flowing through the electrical resistance of the current carrier, heat it by Joule heating. In another example of heating by an electrical current, the current carrier may be connected to electrical contacts to complete an electric circuit. An alternating current or a direct current of 1 to 10 A may be used to heat the current carrier. This option allows synthesis without any direct contact to the walls of a reaction vessel.

The synthesis may also be carried out without a crucible. Without wishing to be bound by theory, it is postulated that separation of the heated current carrier from other non-reactant materials in the heating step may be beneficial as it decreases the possibility of side reactions with such materials leading to impurities as defined below. If a crucible is used in the heating step, the crucible may be inert under the reaction conditions. Where a crucible is used it is preferably a glassy carbon crucible.

The temperature of the current carrier upon contact with gaseous boron halide influences the composition of the electrocatalyst. The temperature of the current carrier may be within a range of 500 - 2000 °C, preferably 600 - 1800 °C, more preferably 700 - 1600 °C and most preferably 800 - 1200 °C. In a particularly preferred embodiment, the temperature of the current carrier is 800 °C. The temperature may be measured by using a pyrometer.

When forming the electrocatalyst by contacting the heated current carrier with gaseous boron halide, the partial pressure of the gaseous boron halide may be controlled. In the following, the term "partial pressure" is synonymous with the term "vapour pressure". The partial pressure of the boron halide atmosphere may influence the composition and thickness of the electrocatalyst. The pressure of the gaseous boron halide may be within a range of 1 mbar-1 bar, preferably 0.05 bar - 0.5 bar and more preferably 0.09 bar - 0.2 bar. Alternatively, and according to a more preferred embodiment, the reaction may be controlled by duration of exposure of the heated current carrier to the gaseous boron halide. After evacuation, preferably up to about 5*10$^{-3}$ mbar, the heated current carrier may be contacted with the gaseous boron halide for 1-30 seconds, preferably 2 - 20 seconds and most preferably 5 - 10 seconds, followed by evacuation in order to remove the gaseous boron halide. This operation is preferably repeated two or more times.

The boron halide may be used alone or in a mixture with an inert gas. Without wishing to be bound by theory, the presence of an inert gas may lead to the reaction proceeding less vehemently than in a pure boron halide atmosphere. Any suitable inert gas may be used in the third method of the present invention. Exemplary inert gases are nitrogen or argon, preferably argon is used. The vapour pressure of the inert gas may optionally be in the range of 1 mbar - 1 bar, preferably 0.05 bar - 0.5 bar and more preferably 0.09 bar - 0.2 bar depending on the starting materials and the desired materials. In a more preferred embodiment of the third embodiment, the gaseous boron halide is used without an inert gas.

Moreover, when contacting the heated current carrier with a gaseous boron halide, the current carrier may be exposed to the gaseous boron halide for 1 second to 220 minutes, preferably for 10 seconds to 200 minutes, preferably for 30 seconds to 180 minutes, preferably for 1 minute to 120 minutes and preferably for 2 to 60 minutes. The contacting time may be varied together with the partial pressure of the halide and the temperature of the current carrier to influence the composition and thickness of the electrocatalyst. The heated current carrier may be contacted one, two, three or more times with the gaseous boron halide, optionally with an evaporation or washing step in between. In a particularly preferred embodiment, the heated current carrier is exposed to a gaseous boron halide three times for 5-10 seconds followed by an evacuation step.

The third method of reacting the boron halide with the metals M1 and M2 of the current carrier may be, each independently from another or in any combination: continuous; carried out in a single step; without the use a binder or without the use of a crucible. In a particularly preferred embodiment, the method allows the direct formation of an electrocatalyst on the current carrier without the necessity of an additional binder or a crucible. The electrode produced by the third method of the present invention may therefore consist of the current carrier and the electrocatalyst.

The electrode produced by the third method of the present invention may be particularly suitable for use in large-scale electrolysis. In the produced electrode, the current carrier described in detail above is used to form the electrocatalyst. As the overall shape of the current carrier may remain unchanged upon the formation of the electrocatalyst on the current carrier by the third method described herein, so does the surface area that is defined above. Accordingly, the surface area of the electrode as used herein may be similar to the projected geometrical surface area of the current carrier. It may be determined by measuring the dimensions of the exposed surfaces of the electrode and calculating the overall surface area. The electrode prepared by the third method of the present invention may have a surface area of greater than 100 cm², preferably greater than 500 cm², preferably greater than 1000 cm², preferably greater than 0.5 m², preferably greater than 1 m² and most preferably greater than 3 m².

As described for the first method, the obtained electrode may be subjected to an electrocatalytic reaction, which is preferably the OER or the HER.

The surface of the electrocatalyst may change during an electrocatalytic reaction. Such altered surface of the electrocatalyst may be refreshed by polishing the surface of the electrode as previously described. The invention therefore includes a method of refreshing the catalyst by treating the surface of the electrode, preferably by polishing the surface of the electrode as previously described. The refreshing step may be carried out prior to an electrocatalytic reaction, for example on a pristine electrocatalyst.

Alternatively, or in addition to the polishing step, a regeneration step of contacting the optionally polished electrode in a heated state with gaseous boron halide to react the boron halide with the metals M1 and M2, as described above.

**Use of electrode**

Another aspect of the present invention relates to the use of the electrode in an electrocatalytic reaction, which may be optionally selected from OER, HER or both with the same electrocatalyst, oxygen reduction reaction (ORR), hydrogen oxidation reaction (HOR) or both with the same electrocatalyst and electrochemical processes with organic compounds.

An electrocatalytic reaction can be defined as electrochemical reactions, which occur at the interface between an electrolyte and a surface of an electrode and is facilitated by electrocatalyst comprised in the electrode. An electrocatalytic application in the sense of the present invention may comprise different variants of electrochemical water splitting (EWS) in general by using alkaline electrolyzers (AELs), solid oxide electrolyzers (SOELs) and solid polymer electrolyzers (SPELs). The latter can be realized in proton exchange membrane (PEM), anion exchange membrane (AEM) or bipolar membrane (BPM) electrolysers. Independently on the type of electrolyser, EWS involves two corresponding half reactions: oxygen evolution reaction (OER) at the anode and the hydrogen evolution reaction (HER) at the cathode. Moreover, an electrocatalytic application in the sense of the present invention may comprise the oxygen reduction reaction (ORR) in the fuel cells, as well as further electrochemical processes with organic compounds, e.g. methanol oxidation, ethanol oxidation, formic acid oxidation, or $CO_2$ reduction. An electrocatalytic reaction in the sense of the present invention may further be nitrogen reduction reaction (NRR), which enables the production of ammonia at ambient conditions from $N_2$ and $H_2O$. Electrochemical processes with organic compounds may be, for example, electrooxidation of alcohols.

The electrocatalytic reaction as described herein may be performed using an alkaline or acidic electrolyte. In a particularly preferred embodiment, the electrocatalytic reaction is performed under alkaline conditions, e.g. by using an aqueous KOH solution, preferably an aqueous solution with a hydroxide concentration of 0.1 to 7.5 M. In lab scale, a solution with a hydroxide concentration of 0.1 to 2 M, more preferably of 0.5 to 1.5 M and most preferably of 1 M may be used. On an industrial scale a hydroxide concentration of up to 7.5 M may be used, preferably 6.5 to 7.5 M, preferably 6.9 M. Alkaline electrolysis may be performed at room temperature in lab scale and on an industrial scale at temperatures in the range of 70 - 90 °C, preferably 75 - 85 °C. However, electrocatalytic reaction may also be performed under acidic conditions, e.g. by using an aqueous $HClO_4$ solution or $H_2SO_4$ solution, preferably an aqueous solution with a proton concentration of 0.1 to 7.5 M. In lab scale, a solution with a proton concentration of 0.03 to 2 M, more preferably of 0.6 to 1.5 M and most preferably of 0.9 to 1 M is used.

The cell used in the electrocatalytic reaction comprises at least two electrodes, i.e. an anode where the oxidation takes place and a cathode where the reduction takes place. At least one of the electrodes, and preferably the anode and/or the cathode comprise the electrocatalyst of the invention. For electrochemical testing, a three-electrode cell comprising a working electrode, a reference electrode and a counter electrode may be used. The electrode of the present invention may be used as working electrode. In a particularly preferred embodiment, the reference electrode may comprise Hg/HgO and preferably may be a Hg/HgO electrode, while the counter electrode may comprise Pt and preferably may be Pt, such as a Pt wire.

The current applied to the electrode during the electrocatalytic reaction according to the present invention may be a direct current or an alternating current, preferably a direct current. The applied potential may be in the range 1.0 - 2.0 V versus reversible hydrogen electrode.

Where the electrode is produced by the third method of the present invention and comprises a current carrier and an electrocatalyst but no binder, the lifetime of the electrode as well as the mechanical and chemical stability depend only on the contact between the current carrier and the electrocatalyst. Hence, the electrocatalytic reaction using the electrocatalyst produced by the third method of the present invention provides a system for use in catalysis that is easy to control.

In a preferred embodiment, the electrocatalytic reaction is OER and/or the HER. In this embodiment, the reaction is performed under alkaline condition as specified above.

As described previously, the surface of the electrocatalyst may change during an electrocatalytic reaction, and such altered surface of the electrocatalyst may be refreshed by polishing the surface of the electrode as previously described. In particular, an electrode consisting of an electrocatalyst as described before can be refreshed by polishing the surface of the electrode.

The invention also relates to a method of carrying out an electrocatalytic reaction as described above using the electrode described above.

## Examples

Hereinbelow, the present invention will be described in more detail with reference to the examples. However, the present invention is not limited to the following Examples.

**Analytical Methods**

Powder X-ray diffraction (PXRD)

Analysis of the crystal structure of the electrocatalyst may be performed by PXRD in transmission mode or XRD in reflection mode. The latter can be applied if the electrocatalyst is in the cylindrical form or on a support in a cylindrical support. PXRD patterns were obtained using a Huber imaging-plate Guinier camera G670 (Co $K\alpha_1$-radiation, $\lambda$ = 1.788996 (1) Å, transmission mode). The internal standard $LaB_6$ ($\alpha$ = 4.1569 Å) was added for the calibration of peaks in the experimental PXRD patterns. Cylindrical specimens may be characterized in the reflection mode with Cu $K\alpha_1$ radiation ($\lambda$ = 1.54059 Å) on a STOE STADIP MP diffractometer, equipped with a DECTRIS MYTHEN 1K detector. The phase analysis of the synthesized samples was performed via comparison of experimentally obtained PXRD pattern with the calculated one using WinXPOW software (Version 2.25). The calculated PXRD patterns are obtained using the crystallographic data, available in scientific publications or databases (ICSD, CRYSTMET, etc.). The lattice parameters of the $ZrCo_3B_2$ and $HfCo_3B_2$ were refined by means of least-square method implemented in the WinCSD software package (L. Akselrud, Y. Grin, J. Appl. Crystallogr. 47 (2014) 803).

Differential scanning calorimetry (DSC)

DSC was carried out under argon atmosphere (Netzsch DSC 404C Pegasus, ZrOz crucible with a lid, $T_{max}$ = 1500 °C, heating/cooling rates of 5, 10 or 20°C min$^{-1}$).

Light microscopy

Light micrographs in bright-field and polarized light were obtained at different magnifications (light microscope LM-Zeiss Axioplan 2 equipped with CCD camera and Olympus stream).

Scanning electron microscopy (SEM)

The morphology and phase distribution in the prepared electrocatalysts were investigated via scanning electron microscopy SEM (JEOL JSM-7800F microscope) using the acceleration voltage of 15 kV and EDXS (Quantax 400, Bruker, Silicon Drift Detector). Wavelength-dispersive X-ray spectroscopy (WDXS, CAMECA electron microprobe SX100 setup, tungsten cathode, ZrAsSe, Hf-modified (Hf 98.40 %, Zr 1.60 %), CoSi and $Ni_3B$ as reference materials for Zr, Hf, Co and B content determination) was carried out to determine the compositions of the target phase. The BSE images were recorded for selected sample areas. The intensity of the BSE signal is strongly related to the atomic number (Z) of the specimen. Hence, BSE images can provide information about the distribution of different phases in the sample. BSE are generally used in analytical SEM, along with the spectra made from the characteristic X-rays. The size of the interaction volume (depth of SEM analysis) depends on the applied acceleration voltage, the atomic number of the specimen and the specimen's density. Secondary electron (SE) images may be recorded as well. Unlike BSEs, SEs originate from the surface or the near-surface regions of the sample. They are a result of inelastic interactions between the primary electron beam and the sample and have lower energy than the BSEs. Hence, SE images can provide information about the topography of the sample surface.

Inductively coupled plasma optical emission spectroscopy (ICP-OES)

To check the possible dissolution of the electrode components, aliquots of the electrolyte were taken after each electrochemical experiment and analyzed with ICP-OES (5100 SVDV, Agilent).

**Electrochemical Testing**

All electrochemical measurements were carried out in 1 M KOH electrolyte (pH = ~13.8) in the PEEK three-electrode cell, containing a working electrode according to the present invention, platinum wire as counter electrode and Hg/HgO reference electrode.

Oxygen evolution reaction (OER)

The initial OER activity of an electrode was measured by linear sweep voltammetry (LSV, $E_{max}$ = 2.0 $V_{RHE}$, sweep rate of 5 mV s$^{-1}$). Subsequently, a cyclic voltammetry (CV, $E_{max}$ = 1.6 $V_{RHE}$, sweep rate of 50 mV s$^{-1}$, 50 cycles) was carried out, and then another LSV was executed in order to investigate the effect of the CV on the properties of the electrocatalysts. The stability of OER performance was monitored primarily at the benchmarking current density (j = 10 mA cm$^{-2}$) for 2 h via chronopotentiometry (CP). Further, long-term CP measurements were carried out at elevated current densities (j = 50, 100, 200 mA cm$^{-2}$) for a period of 456 h for ZrCo$_3$B$_2$ and 504 h for HfCo$_3$B$_2$ in total. The measured current values were normalized with the geometrical surface area of the electrode (0.204 cm$^2$) and the applied potential was converted to the potential versus reference hydrogen electrode (RHE). After each long-term CP measurement at a certain current density, a LSV measurement was carried out under the same conditions as specified above in order to measure the OER activity of the electrocatalyst. Between different experiments, (i.e. between standard OER (LSV + CP at 10 mA/cm$^2$) and the long-term experiments), the electrode was polished using SiC paper, diamond solutions with different particle sizes 6, 3, ¼ μm and the polishing machine EcoMet250Pro (Buehler).

Hydrogen evolution reaction (HER)

The initial HER activity of an electrode was measured by CV ($E_{min}$ = -0.45 $V_{RHE}$, sweep rate of 5 mV s$^{-1}$, 4 cycles). Afterwards, CP was performed to monitor the stability of HER activity over time at the benchmarking current density (j = -10 mA cm$^{-2}$) for 2 h. After the CP measurements, CV measurements were carried out under the same conditions. Prior to any new measurement, the electrode was polished using SiC paper, diamond solutions with different particle sizes 6, 3, ¼ μm and the polishing machine EcoMet250Pro (Buehler).

**Preparation of Electrodes**

Example 1: Preparation of ZrCo-B electrocatalyst

An electrocatalyst having a nominal composition Zr$_{16.67}$Co$_{50}$B$_{33.33}$ was prepared from Zr slices (Haines & Maassen GmbH, Zr+Hf min. 99.99 %, Hf max. 0.5 %), Co slugs (Alfa Aesar, 99.95 % metal basis), and B crystalline powder (Alfa Aesar, 99.99 % metal basis). The initial components were homogenously arc-melted three times on a water-cooled copper bottom under a partial vacuum-argon atmosphere to obtain a melt mixture, which was then cooled down to obtain a solid product. The solid product was annealed at 1473 K for 7 days and then quenched to obtain an annealed product. The annealed product was ground and obtained powder was sintered in a graphite die by Spark Plasma Sintering (SPS, 515 ET Sinter Lab, Fuji Electronic Industrial Co. Ltd.). The sintering conditions were optimized according to the thermal analysis data for the annealed samples (max. temperature of 1000 °C, dwelling time 15 minutes). The sintered product was polished using SiC paper, diamond solutions with different particle sizes 6, 3, ¼ μm and the polishing machine EcoMet250Pro (Buehler). The polished product was used as an electrode for further testing in electrocatalytic reactions. The produced electrode had a cylindrical shape.

Example 2: Preparation Hf-Co-B electrocatalyst

An electrocatalyst having a nominal composition Hf$_{16.67}$Co$_{50}$B$_{33.33}$ has been prepared in the same manner as in Example 1, except that Hf slices (Haines & Maassen GmbH, Zr+Hf min. 99.99 %, Zr max. 0.11 %) were used instead of the Zr slices.

Comparative Examples 1-3: Preparation of Co, Zr and Hf reference electrocatalysts

Co plate (Alfa Aesar, 99.995 % metal basis), Zr plate (Haines&Maasen, Zr+Hf min. 99.99%, Hf max. 0.5 %) and Hf plate (Haines&Maasen, Zr+Hf min. 99.99%, Zr max. 0.12 %) were cut and shaped into a cylindrical shape for use as electrodes.

| Comparative Examples | Electrode material |
|:---:|:---:|
| 1 | Co |
| 2 | Zr |
| 3 | Hf |

**Evaluation of Results**

Powder X-ray diffraction (PXRD) explicitly showed the presence of $ZrCo_3B_2$ (a = 8.4269(2) Å, c = 9.1280(4) Å) and $HfCo_3B_2$ (a = 8.3815(6) Å, c = 9.1138(3) Å) as major phases in the electrodes according to Examples 1 and 2. In the electrode of Example 1, the minority phase $Zr_xCo_{23-x}B_6$ (x = 2-3 with $\alpha$ = 10.5419 Å) in quantity less than 5 % was detected.

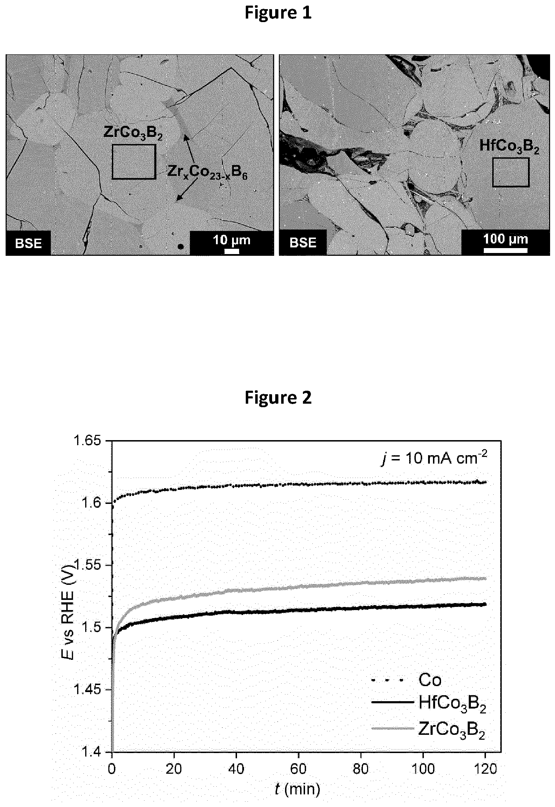

Microstructural similarities of $ZrCo_3B_2$ and $HfCo_3B_2$ were visualized via scanning electron microscopy (SEM). Figure 1 shows BSE images of the electrodes of Examples 1 and 2. As seen therefrom, $ZrCo_3B_2$ and $HfCo_3B_2$ form the main matrix of the electrocatalysts of Examples 1 and 2, respectively. In the electrode of Example 1, it is observed that the Co-rich minor phase $Zr_xCo_{23-x}B_6$ (x = 2-3) fills the gaps between large grains of $ZrCo_3B_2$ matrix phase. As determined by the WDXS measurements, the elemental compositions of matrix phase are $Zr_{16.54(1)}Co_{50.23(2)}B_{33.23(3)}$ and those of the minor phase are $Zr_{3.53(1)}Co_{75.3(2)}B_{21.1(1)}$. They are in good agreement with the nominal and intended composition $Zr_{16.67}Co_{50}B_{33.33}$ as well as with those known in the literature $Zr_xCo_{23-x}B_6$ (x = 2-3), playing a role of admixture in the synthesized sample. It has been determined that the electrodes of Examples 1 and 2 have the conductivity of $2.17*10^5$ S/m and $2.60*10^5$ S/m, respectively, at a room temperature (T=300K).

Figure 2 shows the chronopotentiometry results obtained at current density of 10 mA cm$^{-2}$ for the electrodes of Examples 1 and 2 and Comparative Example 1 during OER. Obtained potentials are 1.51 V vs. RHE for $ZrCo_3B_2$ (Example 1), and 1.5 V vs. RHE for $HfCo_3B_2$ (Example 2), which are significantly lower compared to 1.61 V vs. RHE for cobalt (Comparative Example 1).

To evaluate the stability of the electrode efficiency over time, the electrodes of Examples 1 and 2 were tested for prolonged periods of time by performing long-term CP measurements at 50, 100 and 200 mA cm$^{-2}$ current densities. After each long-term CP measurement at a certain current density, a LSV measurement has been performed to measure the OER activity of the electrocatalyst.

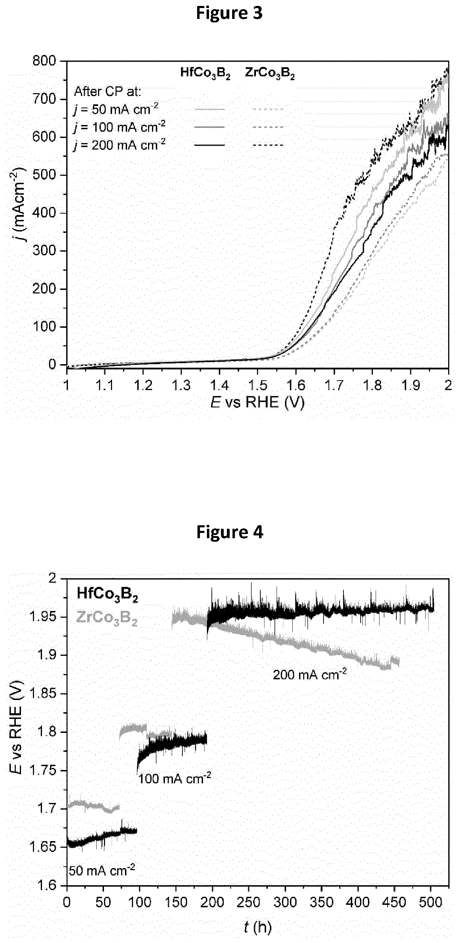

The obtained linear sweep voltammograms are presented in Figure 3, which indicates that excellent OER activities are sustained even after long-term CP measurements at the elevated current densities of up to 200 mA cm$^{-2}$. $ZrCo_3B_2$ (Example 1) shows a significant enhancement of OER activity (expressed by obtained current density at potentials above 1.5 V vs. RHE), especially after CP at 200 mA cm$^{-2}$. LSV features of $HfCo_3B_2$ (Example 2) demonstrate a negligible diminishment in performance after CP at consecutively increased current values.

Figure 4 summarizes the chronopotentiometry data obtained at elevated current densities (j = 50, 100, 200 mA cm$^{-2}$) for the electrodes of Examples 1 and 2. The results obtained by CP are in line with those obtained by LSV, highlighting slight drop of OER activity with $HfCo_3B_2$ electrode with time of operation, represented by the positive gradient of the potential, and considerable continuous activation of $ZrCo_3B_2$, represented by the negative gradient of the potential.

The elemental analysis (ICP-OES) of the used electrolyte after the long-term CP measurements has revealed the trace amount of cobalt (Co: 0.26 mg L$^{-1}$) in case of $ZrCo_3B_2$ (Example 1) whereas amounts of other constituent components were below the detection limits of ICP-OES (<0.05 ml L$^{-1}$). Contrary to $ZrCo_3B_2$, in case of $HfCo_3B_2$ (Example 2), only 0.58 ml L$^{-1}$ hafnium and 0.2 ml L$^{-1}$ boron were detected in the electrolyte. These results suggest that the dissolution of constituent elements has occurred during the long-term CP measurements, suggesting the dynamic structure of the surface- or near-surface region of the electrocatalyst. Elemental mapping via SEM/EDXS for both $ZrCo_3B_2$ and $HfCo_3B_2$ showed that surface- or near surface region of the $ZrCo_3B_2$, and $HfCo_3B_2$ electrodes are Zr- and Co-enriched, respectively.

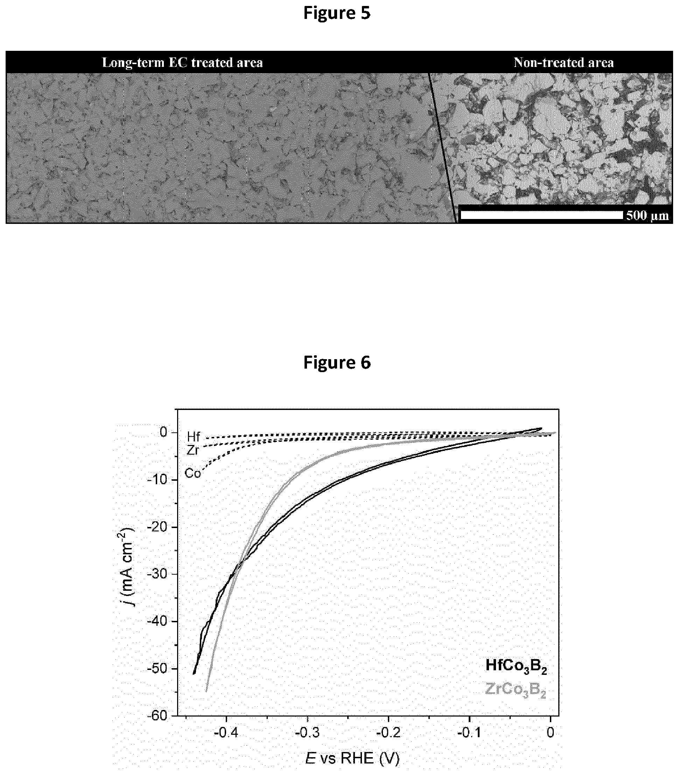

After the long-term CP measurements, the electrodes were analyzed via XRD and the diffraction patterns suggested that the overall long-range crystalline structures did not alter during the electrochemical experiments. Also, SEM images showed that there was no noticeable deterioration on the surfaces after long-term OER. In Figure 5, the EC-treated area of $ZrCo_3B_2$ (Example 1) is presented together with non-treated area. Unchanged grain size and shape illustrates the stability and robustness of the investigated electrodes. $HfCo_3B_2$ (Example 2) also did not show significant morphologic changes in the grains. In other words, the structural integrity of the compounds of the invention were maintained during long-term OER experiments.

The above results suggest that, during the long-term CP measurements, possible gradual transformation of the structure of the electrocatalyst in micro- or nanoscale at a surface- or near-surface region, or possibly even in a bulk.

For estimation of HER activity and its stability over time of the electrodes of the invention, CV and CP at current density of -10 mA cm$^{-2}$ were performed.

Figure 6 shows cyclic voltammograms measured on the electrodes of Examples 1 and 2 as well as those of Comparative Examples 1 to 3. It can be seen therefrom that the HER activities of $ZrCo_3B_2$ ($E_{onset}$: -0.23V vs. RHE) and $HfCo_3B_2$ ($E_{onset}$: -0.19V vs. RHE) are comparable with the state-of-the-art Pt ($E_{onset}$: -0.23V vs. RHE) and significantly lower than those of constituent elements (Co, Zr and Hf).

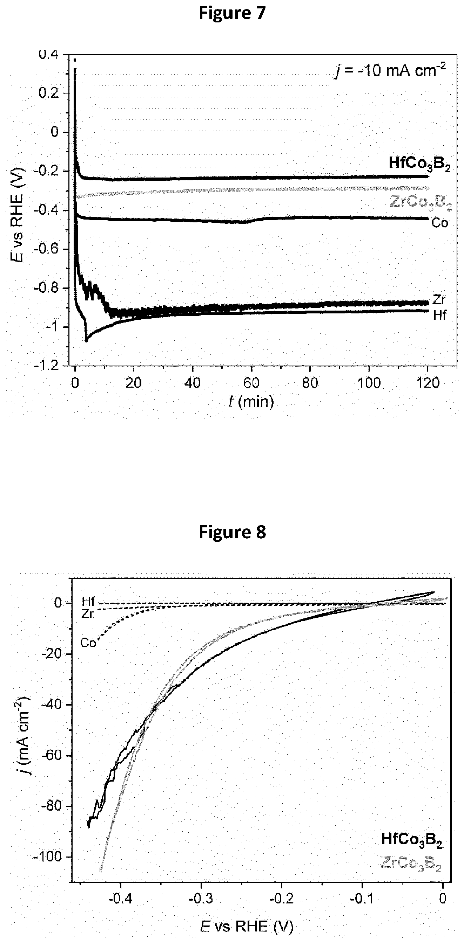

Figure 7 shows chronopotentiometry results obtained for the electrodes of Examples 1 and 2 and those of Comparative Examples 1 to 3 at a current density of -10 mA cm$^{-2}$ for 2 h. A slight activation was observed for both $HfCo_3B_2$ and $ZrCo_3B_2$.

Figure 8 shows cyclic voltammograms measured after the CP experiment on the electrodes of Examples 1 and 2 as well as those of Comparative Examples 2 and 3. It is seen therefrom that the potential of both electrodes $ZrCo_3B_2$ (Example 1) and $HfCo_3B_2$ (Example 2) reach even higher current densities at the same potential values (compared to initial HER activity estimates as shown in Figure 6).

The results of the present examples demonstrate that the electrode of the present invention is robust, stable and highly active in electrocatalytic reactions such as OER and HER, and remarkably even under harsh conditions.

**Claims**

1. An electrode comprising or consisting of an electrocatalyst, the electrocatalyst comprising a metal boride, wherein

   the metal boride comprises

       at least one element M1 selected from Ti, Zr and Hf, and
       at least one element M2 selected from Co, Ni, Ru, Rh, Pd, Ir and Pt; and

   the metal boride contains more than 10 atomic % of M2.

2. The electrode of claim 1, wherein the metal boride is crystalline, and wherein the metal boride preferably comprises an ordered distribution of M1 and M2 within its crystal structure.

3. The electrode of claim 1 or 2, wherein the metal boride contains the element M2 in an amount of 11 atomic % or more, preferably 12 atomic % or more, preferably 15 atomic % or more, preferably 20 atomic % or more, preferably 30 atomic % or more, preferably 40 atomic % or more, preferably 50 atomic %.

4. The electrode of any one of claims 1 to 3, wherein

   the atomic ratio (M1+M2)/B is 0.6 or more, preferably 0.8 or more and 10 or less, more preferably 1.0 or more and 8 or less, particularly 2; and/or
   wherein the atomic ratio M2/M1 is 0.5 or more, preferably 1 or more and 15 or less, more preferably 1 or more and 11 or less, further preferably 2 or more and 4 or less, particularly 3.

5. The electrode of any one of claims 1 to 4, wherein the metal boride contains

   Zr and/or Hf as the element M1, and/or
   Co and/or Ni as the element M2,

   wherein the metal boride preferably has the atomic ratio of M1:M2:B of 1:3:2.

6. The electrode of claim 5, wherein the metal boride consists of

   Zr and/or Hf as the element M1,
   Co and/or Ni as the element M2, and
   boron,

   wherein the metal boride is preferably represented by the formula $M1M2_3B_2$.

7. The electrode of any one of claims 1 to 5, wherein the metal boride further contains less than 2.0 atomic % of one or more doping elements,

   wherein the one or more doping elements are different from M1 and M2,

and optionally wherein the doping elements are one or more elements selected from Ru, Rh, Ir, Pt, Pd, Ni, Fe, Mo, Nb, Ta, W, Ce, Gd, V, Mn, Sr, Sn, Ge, S, P, F, N, and C.

8. An electrode obtainable by subjecting the electrode defined in any one of claims 1 to 7 to an electrocatalytic reaction.

9. An electrolyzer comprising the electrode defined in any one of claims 1 to 8.

10. A method for producing an electrode of any one of claims 1 to 7, comprising steps of

(i) melting

at least one metal selected from Ti, Zr and Hf,
at least one metal selected from Co, Ni, Ru, Rh, Pd, Ir and Pt, and
boron

to obtain a melt mixture, and
(ii) cooling down the melt mixture to obtain a solid product, and
(iii) preferably homogenization annealing the solid product, preferably at a temperature of 800 °C or more for at least 1 hour.

11. The method of claim 10, further comprising a step of

(iv) cutting the optionally annealed solid product, or
(iv') grinding the optionally annealed solid product; and after the step (iv'), optionally further comprising a step of
(v'-a) sintering the ground product, preferably by spark plasma sintering, or
(v'-b) applying the ground product onto an electrode substrate.

12. A method for producing an electrode of any one of claims 1 to 7, comprising steps of

(i) providing a powder composition comprising

at least one element M1 selected from Ti, Zr and Hf,
at least one element M2 selected from Co, Ni, Ru, Rh, Pd, Ir and Pt, and boron; and

(ii) sintering the powder composition,

wherein the step (ii) of sintering is preferably carried out by spark plasma sintering.

13. A method for producing an electrode of any one of claims 1 to 7,

wherein the electrocatalyst is formed on a current carrier, the current carrier comprising

at least one metal M1 selected from Ti, Zr and Hf, and
at least one metal M2 selected from Co, Ni, Ru, Rh, Pd, Ir and Pt; and

wherein the method comprises a step of contacting the current carrier in a heated state with gaseous boron halide to react the boron halide with the metals M1 and M2.

14. A method for producing an electrode of claim 8, wherein an electrode defined in one of claims 1 to 7 is subjected to an electrocatalytic reaction, which is preferably the oxygen evolution reaction or the hydrogen evolution reaction.

15. Use of the electrode of any one of claims 1 to 8 in an electrocatalytic reaction optionally selected from the oxygen evolution reaction, oxygen reduction reaction, hydrogen evolution reaction, hydrogen oxidation reaction and electrochemical processes with organic compounds.

## Figure 1

## Figure 2

## Figure 3

## Figure 4

## Figure 5

## Figure 6

## Figure 7

## Figure 8

Europäisches
Patentamt

European
Patent Office

Office européen
des brevets

# EUROPEAN SEARCH REPORT

**Application Number**

EP 23 18 6351

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PEIGHAMBARDOUST NAEIMEH SADAT ET AL: "Evaluating electrocatalytic activity of metal-substituted hafnium diboride (Hf1-xTMxB2; TM = Ni and Co) toward water splitting", JOURNAL OF ALLOYS AND COMPOUNDS, ELSEVIER SEQUOIA, LAUSANNE, CH, vol. 905, 8 February 2022 (2022-02-08), XP086991267, ISSN: 0925-8388, DOI: 10.1016/J.JALLCOM.2022.164148 [retrieved on 2022-02-08] | 1-6,8,9, 14,15 | INV. C25B1/04 B01J21/02 C25B11/047 C25B11/067 C25B11/075 H01M4/90 C01B35/04 |
| Y | * the whole document * | 4,7, 10-13 | |
| X | METE BUSRA ET AL: "Metal-substituted zirconium diboride (Zr1-xTMxB2; TM = Ni, Co, and Fe) as low-cost and high-performance bifunctional electrocatalyst for water splitting", ELECTROCHIMICA ACTA, ELSEVIER, AMSTERDAM, NL, vol. 389, 17 June 2021 (2021-06-17), XP086715888, ISSN: 0013-4686, DOI: 10.1016/J.ELECTACTA.2021.138789 [retrieved on 2021-06-17] | 1-6,8,9, 14,15 | |
| Y | * the whole document * | 4,7, 10-13 | |

**TECHNICAL FIELDS SEARCHED (IPC)**

C25B
B01J
H01M
C01B

-/--

The present search report has been drawn up for all claims

| Place of search | Date of completion of the search | Examiner |
|---|---|---|
| Munich | 19 January 2024 | Desbois, Valérie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

## EUROPEAN SEARCH REPORT

**Application Number**

EP 23 18 6351

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CHEN ZHIJIE ET AL: "Boride-based electrocatalysts: Emerging candidates for water splitting", NANO RESEARCH, TSINGHUA UNIVERSITY PRESS, CN, vol. 13, no. 2, 2 January 2020 (2020-01-02), pages 293-314, XP037061126, ISSN: 1998-0124, DOI: 10.1007/S12274-020-2618-Y [retrieved on 2020-01-02] * 2.4. High-temperature processes; pages 297-298 * * 3. Component tailoring; page 300 – page 303 * | 4,7,10, 11 | |
| Y | WO 2019/094506 A1 (UNIV CALIFORNIA [US]) 16 May 2019 (2019-05-16) * claims 1, 2 * | 10,11 | |
| Y | FR 3 131 739 A1 (SAINT GOBAIN CT RECHERCHES [FR]) 14 July 2023 (2023-07-14) * claims 13, 16 * | 12 | **TECHNICAL FIELDS SEARCHED (IPC)** |
| Y | US 5 059 563 A (KHAZAI BIJAN [US] ET AL) 22 October 1991 (1991-10-22) * column 3, lines 4-54 * * column 1, lines 56-61 * | 12,13 | |
| Y | FR 2 067 802 A5 (PARIS RENE) 20 August 1971 (1971-08-20) * page 3, line 31 – page 4, line 9 * | 13 | |

-/--

The present search report has been drawn up for all claims

| Place of search | Date of completion of the search | Examiner |
|---|---|---|
| Munich | 19 January 2024 | Desbois, Valérie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EUROPEAN SEARCH REPORT

Application Number

EP 23 18 6351

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHAO WEI ET AL: "Surface Modification towards Integral Bulk Catalysts of Transition Metal Borides for Hydrogen Evolution Reaction", CATALYSTS, vol. 12, no. 2, 16 February 2022 (2022-02-16), page 222, XP093121454, CH ISSN: 2073-4344, DOI: 10.3390/catal12020222 * abstract * * 1. Introduction; pages 1-2 * * 4. Conclusions; pages 9-10 * | 1-15 | |

-----

TECHNICAL FIELDS
SEARCHED      (IPC)

The present search report has been drawn up for all claims

| Place of search | Date of completion of the search | Examiner |
|---|---|---|
| Munich | 19 January 2024 | Desbois, Valérie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 6351

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2024

| Patent document cited in search report | | | Publication date | | Patent family member(s) | | Publication date |
|---|---|---|---|---|---|---|---|
| WO 2019094506 | A1 | | 16-05-2019 | AU | 2018366053 | A1 | 23-04-2020 |
| | | | | CA | 3084364 | A1 | 16-05-2019 |
| | | | | CN | 111770893 | A | 13-10-2020 |
| | | | | EP | 3707100 | A1 | 16-09-2020 |
| | | | | JP | 7362599 | B2 | 17-10-2023 |
| | | | | JP | 2021502317 | A | 28-01-2021 |
| | | | | KR | 20200071141 | A | 18-06-2020 |
| | | | | TW | 201932414 | A | 16-08-2019 |
| | | | | US | 2019135646 | A1 | 09-05-2019 |
| | | | | US | 2023382747 | A1 | 30-11-2023 |
| | | | | WO | 2019094506 | A1 | 16-05-2019 |
| FR 3131739 | A1 | | 14-07-2023 | FR | 3131739 | A1 | 14-07-2023 |
| | | | | WO | 2023135389 | A1 | 20-07-2023 |
| US 5059563 | A | | 22-10-1991 | EP | 0351198 | A2 | 17-01-1990 |
| | | | | IL | 90932 | A | 15-11-1992 |
| | | | | JP | H0280318 | A | 20-03-1990 |
| | | | | US | 5059563 | A | 22-10-1991 |
| | | | | US | 5169832 | A | 08-12-1992 |
| FR 2067802 | A5 | | 20-08-1971 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **N.S. PEIGHAMBARDOUST et al.** *Journal of Alloys and Compounds*, 2022, vol. 905, 164148
- **B. METE et al.** *Electrochimica Acta*, 2021, vol. 389, 138789
- *DIN ISO*, March 2019, 15901-1
- **L. AKSELRUD ; Y. GRIN**. *J. Appl. Crystallogr*, 2014, vol. 47, 803